# EUROPÄISCHE PATENTSCHRIFT

(11) **EP 3 300 194 B1**
(45) Veröffentlichungstag und Bekanntmachung des Hinweises auf die Patenterteilung: **12.12.2018**
(21) Anmeldenummer: 17189165.8
(22) Anmeldetag: 04.09.2017
(51) Int. Cl.: H02B 13/025

(54) **LÜFTUNGSKLAPPE FÜR SCHALTANLAGEN**
VENTILATION FLAPS FOR SWITCHGEAR
CLAPETS D'AÉRATION POUR INSTALLATION DE COMMUTATION

(30) Priorität: 22.09.2016 DE 102016218231
(43) Veröffentlichungstag der Anmeldung: 28.03.2018
(73) Patentinhaber: Siemens Aktiengesellschaft, 80333 München (DE)
(72) Erfinder: OZER, Cengiz, 41480 Gölcük-Kocaeli (TR)

(56) Entgegenhaltungen:
- EP-A1- 2 145 365
- DE-A1-102012 218 782
- GB-A- 2 519 807

## Beschreibung

Die Erfindung betrifft eine Lüftungsklappe für Schaltanlagen, ein Lüftungssystem für Schaltanlagen und ein Verfahren zur Montage von Lüftungsklappen in Schaltanlagen.

Aus dem Stand der Technik (z.B. aus der DE102012218782 A1) sind Lüftungsklappen für Schaltanlagen, insbesondere luftisolierte, aber auch gasisolierte Schaltanlagen bekannt. Diese Klappen sind drehbar an einer Seite an einer Öffnung einer Schaltanlage befestigt, so dass im Belüftungsfall der Schaltanlage die Lüftungsklappe entweder in einem geöffneten Zustand gehalten wird, oder durch die Luftströmung in diesem bewegt wird.
Dabei begrenzt die Lüftungsklappe selbst den maximalen Luftstrom, und dadurch den maximal zulässigen Nennstrom, oder die Mindestgröße der Lüftungsöffnung.
Aufgabe der Erfindung ist es nun, die Nachteile aus dem Stand der Technik zu beheben und eine günstige, kompakte Lüftungsklappe mit verbesserten Lüftungseigenschaften bereitzustellen.
Diese Aufgabe wird durch den unabhängigen Anspruch 1 und die von diesem abhängigen Ansprüche gelöst.
Eine erfindungsgemäße Lüftungsklappe weist ein erstes Lüftungsklappenelement und mindestens ein zweites Lüftungsklappenelement auf. Das erste Lüftungsklappenelement weist erste Lüftungsschlitze auf, das zweite Lüftungsklappenelement weist zweite Lüftungsschlitze auf. In einer ersten Position der Lüftungsklappe sind:
1.1. die ersten Lüftungsschlitze von dem zweiten Lüftungsklappenelement verschlossen, und
1.2. die zweiten Lüftungsschlitze von dem ersten Lüftungsklappenelement verschlossen,
und in einer zweiten Position der Lüftungsklappe sind:
2.1. die ersten Lüftungsschlitze nicht von dem zweiten Lüftungsklappenelement verschlossen, und
2.2. die zweiten Lüftungsschlitze nicht von dem ersten Lüftungsklappenelement verschlossen.

Das "mindestens ein zweites Lüftungsklappenelement" bezieht sich darauf, dass sich an das zweite Lüftungsklappenelement noch weitere Lüftungsklappenelemente anschließen können, wobei die jeweils vorhandenen weiteren Lüftungsschlitze von vorhergehenden oder nachfolgenden Lüftungsklappenelemente in der ersten Position verschlossen werden.

Dies erfolgt zum Beispiel durch ein unterschiedlich starkes verdrehen und/oder verschwenken und/oder verkippen und/oder bewegen des ersten Lüftungsklappenelements und des zweiten Lüftungsklappenelements aus der ersten Position in die zweite Position.

Die Lüftungsklappen sind dabei bevorzugt einzeln und/oder gemeinsam von einer ersten Position in die zweite Position bewegbar.

In der ersten Position liegt das zweite Lüftungsklappenelement an dem ersten Lüftungsklappenelement an. Die ersten Lüftungsschlitze sind dabei derart angeordnet, dass in der ersten Position die ersten Lüftungsschlitze und die zweiten Lüftungsschlitze nicht übereinander liegen, also die ersten Lüftungsschlitze von dem zweiten Lüftungsklappenelement verschlossen sind, und die zweiten Lüftungsschlitze von dem ersten Lüftungsklappenelement verschlossen sind.

Die ersten Lüftungsschlitze sind also versetzt zu den zweiten Lüftungsschlitzen angeordnet.

In der zweiten Position der Lüftungsklappe sind die ersten Lüftungsschlitze von dem zweiten Lüftungsklappenelement beabstandet, und die zweiten Lüftungsschlitze von dem ersten Lüftungsklappenelement beabstandet.

Durch die Beabstandung der jeweiligen Lüftungsschlitze von dem jeweiligen Lüftungsklappenelement kann die Luft nicht nur um das Lüftungsklappenelement zirkulieren, sondern auch durch die Lüftungsschlitze des jeweiligen Lüftungsklappenelements durchtreten.

Auch wird bevorzugt, dass das erste Lüftungsklappenelement und das zweite Lüftungsklappenelement an einem gemeinsamen Bewegelement befestigt sind und so zusammen die Lüftungsklappe bilden.

Besonders bevorzugt wird, dass das gemeinsame Bewegelement eine gemeinsame Drehachse oder ein gemeinsames Scharnier oder eine gemeinsame Lagerung in einer Führung ist.

Bevorzugt wird auch, dass das erste Lüftungsklappenelement durch einen ersten Bewegungsbegrenzer und das zweite Lüftungsklappenelement durch einen zweiten Bewegungsbegrenzer in ihrer Bewegung um das oder mit dem Bewegelement begrenzt sind.

Besonders bevorzugt wird, dass das erste Lüftungsklappenelement durch den ersten Bewegungsbegrenzer stärker als das zweite Lüftungsklappenelement durch den zweiten Bewegungsbegrenzer in einer Bewegung um das oder mit dem Bewegelement begrenzt ist.

Auch wird bevorzugt, dass das zweite Lüftungsklappenelement an dem ersten Lüftungsklappenelement mittels eines zweiten Bewegelementes bewegbar befestigt ist. Das bedeutet, dass das erste Lüftungsklappenelement und das zweite Lüftungsklappenelement nicht mittels eines gemeinsamen Bewegelementes bewegbar sind, sondern das erste Lüftungsklappenelement über ein erstes Bewegelement bewegbar ist, und das zweite Lüftungsklappenelement mittels eines zweiten Bewegelementes bewegbar ist.

Besonders bevorzugt wird, dass das erste Lüftungsklappenelement bewegbar an einem ersten Bewegelement zu befestigen ist und das zweite Lüftungsklappenelement an dem zweiten Lüftungsklappenelement mittels des zweiten Bewegklappenelements bewegbar befestigt ist.

Besonders bevorzugt wird auch, dass das erste Lüftungsklappenelement durch einen ersten Bewegungsbegrenzer in einer Bewegung um das oder mit dem ersten Bewegelement begrenzt ist und das zweite Lüftungsklappenelement durch einen zweiten Bewegungsbegrenzer in einer Bewegung um das oder mit dem zweiten Bewegelement begrenzt ist.

Auch wird bevorzugt, dass die Lüftungsklappe zusätzlich zum ersten Lüftungsklappenelement und zum zweite Lüftungsklappenelement ein oder mehr weitere Lüftungsklappenelemente aufweist, wobei die weiteren Lüftungsklappenelemente jeweils Lüftungsschlitze aufweisen, die jeweils von anderen Lüftungsklappenelementen in der ersten Position verschlossen werden.

Bevorzugt wird auch ein Lüftungssystem für Schaltanlagen, wobei das Lüftungssystem ein Lüftungseinlass oder ein Lüftungsauslass mit einer Lüftungsklappe nach einem der vorstehenden Ausführungen aufweist.

Besonders bevorzugt wird, dass die Lüftungsklappe von der ersten Position in die zweite Position in Richtung des jeweiligen gewünschten Luftstromes bewegt wird.

Bevorzugt wird auch ein Verfahren zum Montieren einer Lüftungsklappe für Schaltanlage en, wobei in oder an einem Lüftungseinlass oder Lüftungsauslass eine Lüftungsklappe nach einem der vorstehenden Ausführungen befestigt wird.

Die Erfindung wird im Folgenden anhand von Figuren und einem Ausführungsbeispiel erläutert.
- Figur 1:: Schnitt durch einen Ausschnitt einer Schaltanlage mit einer herkömmlichen Lüftungsklappe;
- Figur 2:: Schnitt durch einen Ausschnitt einer Schaltanlage mit einer herkömmlichen Lüftungsklappe in perspektivischer Darstellung;
- Figur 3:: Ausschnitt aus einer schematischen Darstellung einer Schaltanlage mit einer erfindungsgemäßen Lüftungsklappe in perspektivischer Darstellung;
- Figur 4:: Schnitt durch einen Ausschnitt einer Schaltanlage mit einer erfindungsgemäßen Lüftungsklappe;
- Figur 5:: Schnitt durch eine perspektivische Darstellung eines Ausschnittes einer schematischen Darstellung einer Schaltanlage mit erfindungsgemäßer Lüftungsklappe;
- Figur 6:: perspektivische Darstellung eines Schnittes durch eine Schaltanlage mit erfindungsgemäßer Lüftungsklappe.

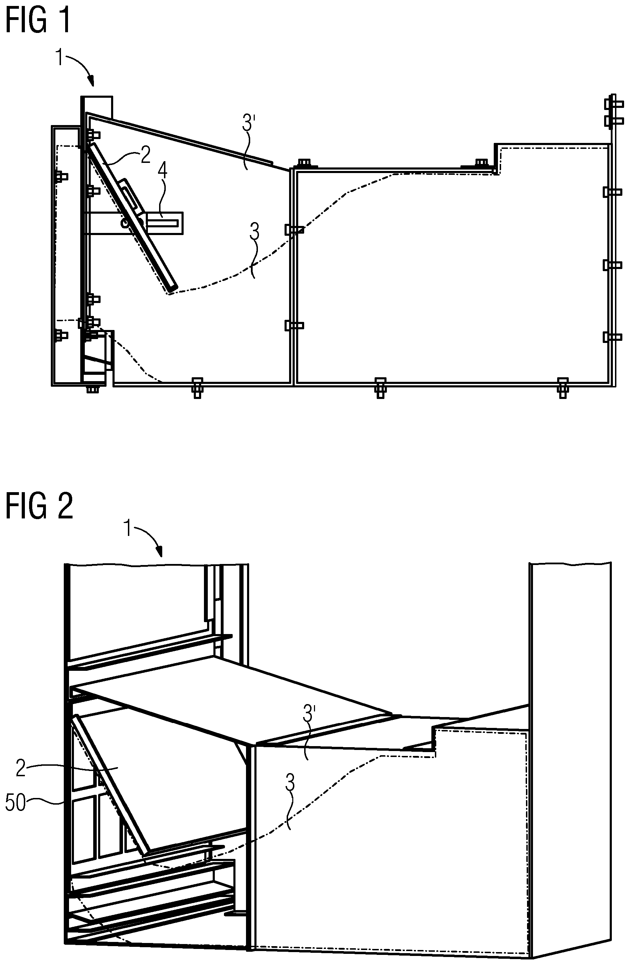

Die Figur 1 zeigt einen Ausschnitt eines Schnittes von einer Schaltanlage 1 mit einer herkömmlichen Lüftungsklappe 2. Die Bewegung der herkömmlichen Lüftungsklappe 2 wird durch einen Bewegungsbegrenzer 4 begrenzt oder alternativ durch den Bewegungsbegrenzer 4 in dieser Position gehalten.

Im in der Figur 1 gezeigten geöffneten Zustand der herkömmlichen Lüftungsklappe 2 ist die Luftströmung 3 möglich, während die herkömmliche Lüftungsklappe 2 eine Abschattung 3' bildet, in der keine Luftströmung 3 auftritt.

Die Figur 2 zeigt eine perspektivische Ansicht eines Schnittes durch einen Teil einer Schaltanlage 1 mit einer herkömmlichen Lüftungsklappe 2, die an einem Lüftungseinlass 50 befestigt ist. Der Lüftungseinlass 50 erlaubt bei geöffneter herkömmlicher Lüftungsklappe 2 die Luftströmung 3, wobei die herkömmliche Lüftungsklappe 2 eine Abschattung 3' erzeugt, in der eine Luftströmung 3 nicht auftritt.

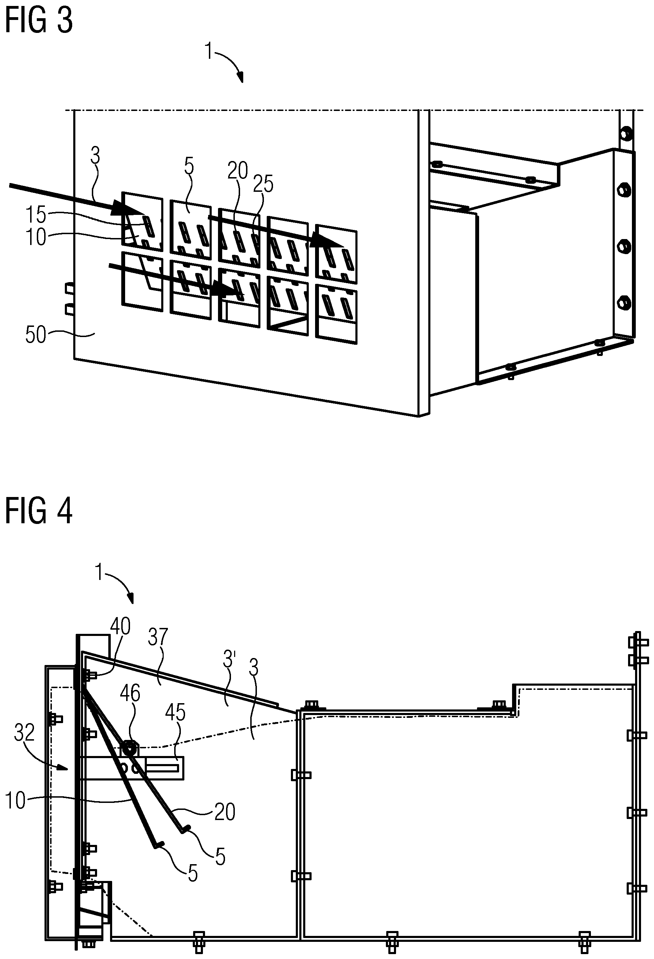

Die Figur 3 zeigt eine schematische Darstellung eines Ausschnittes einer Schaltanlage 1 mit einem Lüftungseinlass 50, wobei der Lüftungseinlass 50 durch eine nicht vollständig erkennbare Lüftungsklappe 5 verschließbar ist. Die Luftströmung 3 ist durch die Pfeile angedeutet.

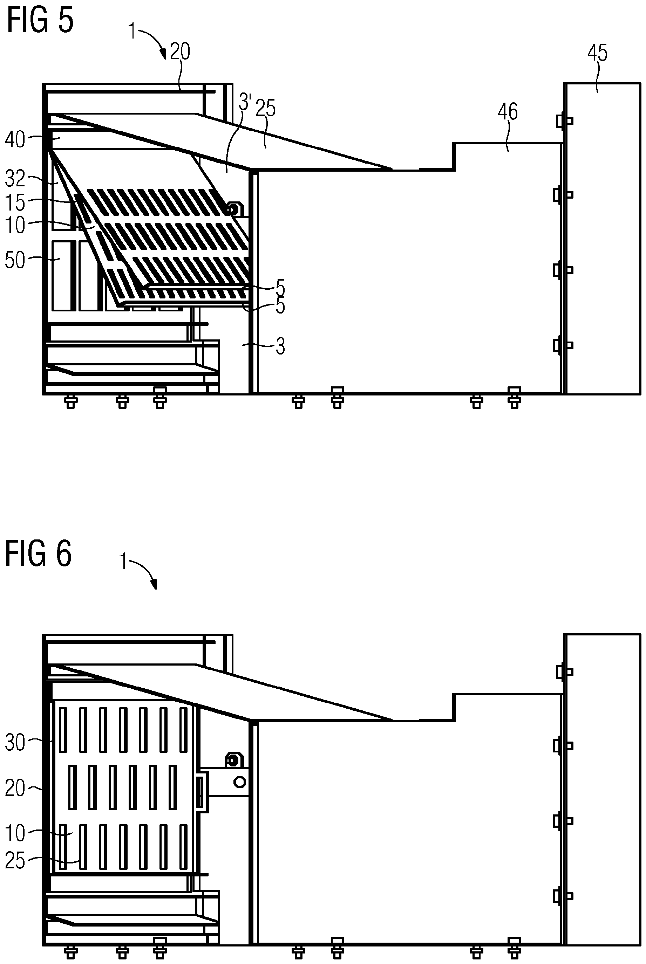

Die Lüftungsklappe 5 weist in der Figur 3 ein erstes Lüftungsklappenelement 10 mit ersten Lüftungsschlitzen 15 auf. Durch die ersten Lüftungsschlitze 15 des ersten Lüftungsklappenelements 10 ist ein zweites Lüftungsklappenelement 20 mit zweiten Lüftungsschlitzen 25 erkennbar. Alternativ zum Lüftungseinlass 50 kann die Öffnung auch ein Lüftungsauslass sein, wobei die Lüftungsklappe 5 dann auf der in Figur 3 angedeuteten Aussenseite befestigt sein müsste und nicht wie in Figur 3 gezeigt an der Innenseite, mit anderen Worten die Lüftungsklappe 5 ist dann so positioniert, dass die Lüftungsklappe 5 von der ersten Position 32 in die zweite Position 30 - in Figur 6 gezeigt - in Richtung des jeweiligen gewünschten Luftstroms - Luftstrom 3 ist in Figur 3 beispielsweise durch die Pfeile angedeutet - bewegt wird.

Die Figur 4 zeigt eine schematische Darstellung eines Schnittes durch einen Ausschnitt einer Schaltanlage 1 mit einer erfindungsgemäßen Lüftungsklappe 5.

Die Lüftungsklappe 5 weist in der Figur 4 ein erstes Lüftungsklappenelement 10 und ein zweites Lüftungsklappenelement 20 auf. Das erste Lüftungsklappenelement 10 wird durch einen ersten Bewegungsbegrenzer 45 in seiner Bewegung um das gemeinsame Bewegelement 40 begrenzt. Das zweite Lüftungsklappenelement 20 wird durch den zweiten Bewegungsbegrenzer 46 in einer Bewegung um das gemeinsame Bewegelement 40 begrenzt. Durch die Begrenzung der jeweiligen Bewegung des ersten Lüftungsklappenelements 10 und des zweiten Lüftungsklappenelements 20 sind in der Figur 4 in der gezeigten zweiten Position 32 die ersten Lüftungsschlitze 15 des ersten Lüftungsklappenelement 10 nicht vom zweiten Lüftungsklappenelement 20 bedeckt. Die ersten Lüftungsschlitze 15 und die zweiten Lüftungsschlitze 15 sind in der Schnittansicht der Figur 4 nicht sichtbar, können aber der Figur 5 entnommen werden. Der Lüftungseinlass 50 ist in der Figur 4 also durch die Lüftungsklappe 5 nicht für einen Luftstrom 3 verschlossen.

Im Vergleich zur Figur 1 ist in der Figur 4 die Abschattung 3' deutlich kleiner und der Bereich mit einer möglichen Luftströmung 3 größer.

Die Figur 5 zeigt eine schematische und perspektivische Darstellung eines Schnittes durch einen Ausschnitt einer Schaltanlage 1 mit einer erfindungsgemäßen Lüftungsklappe 5. Die Lüftungsklappe 5 weist ein erstes Lüftungsklappenelement 10 mit ersten Lüftungsschlitzen 15 und ein zweites Lüftungsklappenelement 20 mit zweiten Lüftungsschlitzen 25 auf. Die Lüftungsklappe 5 ist an einem gemeinsamen Bewegelement 40 beweglich befestigt. Das erste Lüftungsklappenelement 10 wird in seiner Bewegung durch einen ersten Bewegungsbegrenzer 45 begrenzt und das zweite Lüftungsklappenelement 20 wird in seiner Bewegung durch einen zweiten Bewegungsbegrenzer 46 begrenzt. Alternativ kann das erste Lüftungsklappenelement 10 auch durch einen ersten Bewegungsbegrenzer 45 in einer zweiten Position 32 gehalten werden und das zweite Lüftungsklappenelement 20 durch einen zweiten Bewegungsbegrenzer 46 in einer zweiten Position 32 gehalten werden. Die in der zweiten Position 32 einströmende Luft tritt durch den Lüftungseinlass 50 in das Lüftungssystem ein. Im Vergleich zur Figur 1 ist in der Figur 5 ist die Abschattung 3' deutlich kleiner und der Bereich mit einer möglichen Luftströmung 3 größer. Damit ermöglicht die Lüftungsklappe 5 höhere Nennströme und/oder kleinere Lüftungseinlässe 50.

Die Figur 6 zeigt eine schematische und perspektivische Darstellung eines Schnittes durch einen Ausschnitt einer Schaltanlage 1 mit einer erfindungsgemäßen Lüftungsklappe 5 in einer ersten Position 30, in der die zweiten Lüftungsschlitze 25 des zweiten Lüftungsklappenelementes 20 durch das erste Lüftungsklappenelement 10 verschlossen sind, wobei das erste Lüftungsklappenelement 10 nur in den zweiten Lüftungsschlitze 25 des zweiten Lüftungsklappenelementes 20 sichtbar sind, und die ersten Lüftungsschlitze 15 des ersten Lüftungsklappenelementes 10 in Figur 6 hinter dem zweiten Lüftungsklappenelement 20 verborgen und verschlossen sind. In der ersten Position 30 ist der Lüftungseinlass 50 also von der Lüftungsklappe 5 verschlossen.

### Bezugszeichenliste:

- 1: Schaltanlage
- 2: Herkömmliche Lüftungsklappe
- 3: Luftstömung
- 3': Abschattung
- 4: Bewegungsbegrenzer
- 5: Lüftungsklappe
- 10: Erstes Lüftungsklappenelement
- 15: Erste Lüftungsschlitze
- 20: Zweites Lüftungsklappenelement
- 25: Zweite Lüftungsschlitze
- 30: Ersten Position
- 32: Zweite Position
- 40: Gemeinsames Bewegelement
- 41: Erstes Bewegelement
- 42: Zweites Bewegelement
- 45: Erster Bewegungsbegrenzer
- 46: Zweiter Bewegungsbegrenzer
- 50: Lüftungseinlass

## Patentansprüche

1. Lüftungsklappe (5) für Schaltanlagen (1)
dadurchgekennzeichnet, dass
• die Lüftungsklappe (5) ein erstes Lüftungsklappenelement (10) und mindestens ein zweites Lüftungsklappenelement (20) aufweist,
• das erste Lüftungsklappenelement (10) erste Lüftungsschlitze (15) aufweist,
• das zweite Lüftungsklappenelement (20) zweite Lüftungsschlitze (25) aufweist,
• in einer ersten Position (30) der Lüftungsklappe (5)
o die ersten Lüftungsschlitze (15) von dem zweiten Lüftungsklappenelement (20) verschlossen sind, und
∘ die zweiten Lüftungsschlitze (25) von dem ersten Lüftungsklappenelement (10) verschlossen sind,
• und dass in einer zweiten Position (32) der Lüftungsklappe (5)
∘ die ersten Lüftungsschlitze (15) nicht von dem zweiten Lüftungsklappenelement (20) verschlossen sind, und
∘ die zweiten Lüftungsschlitze (25) nicht von dem ersten Lüftungsklappenelement (10) verschlossen sind.

2. Lüftungsklappe (5) nach Anspruch 1,
**dadurch gekennzeichnet, dass** das erste Lüftungsklappenelement (10) und das zweite Lüftungsklappenelement (20) an einem gemeinsamen Bewegelement (40) befestigt sind und so zusammen die Lüftungsklappe (5) bilden.

3. Lüftungsklappe (5) nach Anspruch 2
**dadurch gekennzeichnet, dass** das erste Lüftungsklappenelement (10) durch einen ersten Bewegungsbegrenzer (45) und das zweite Lüftungsklappenelement (20) durch einen zweiten Bewegungsbegrenzer (46) in einer Bewegung um das oder mit dem gemeinsamen Bewegelement (40) begrenzt ist.

4. Lüftungsklappe (5) nach Anspruch 3
**dadurch gekennzeichnet, dass** das erste Lüftungsklappenelement (10) durch den ersten Bewegungsbegrenzer (45) stärker als das zweite Lüftungsklappenelement (20) durch den zweiten Bewegungsbegrenzer (46) in einer Bewegung um das oder mit dem gemeinsamen Bewegelement (40) begrenzt ist.

5. Lüftungsklappe (5) nach Anspruch 1,
**dadurch gekennzeichnet**, das s das zweite Lüftungsklappenelement (20)an dem ersten Lüftungsklappenelement (10) mittels eines zweiten Bewegelementes (42) bewegbar befestigt ist.

6. Lüftungsklappe (5) nach Anspruch 5,
**dadurch gekennzeichnet, dass** das erste Lüftungsklappenelement (10) bewegbar an einem ersten Bewegelement (41) befestigbar ist und das zweite Lüftungsklappenelement (20) an dem ersten Lüftungsklappenelement (10) mittels des zweiten Bewegelementes (42) bewegbar befestigt ist.

7. Lüftungsklappe (5) nach Anspruch 6,
**dadurch gekennzeichnet, dass** das erste Lüftungsklappenelement (10) durch einen ersten Bewegungsbegrenzer (45) in einer Bewegung um das oder mit dem ersten Bewegelement (41) begrenzt ist und das zweite Lüftungsklappenelement (20) durch einen zweiten Bewegungsbegrenzer (46) in einer Bewegung um das oder mit dem zweiten Bewegelement (42) begrenzt ist.

8. Lüftungsklappe (5) nach einem der vorstehenden Ansprüche,
**dadurch gekennzeichnet, dass** die Lüftungsklappe (5) zusätzlich zum ersten Lüftungsklappenelement (10) und zum zweite Lüftungsklappenelement (20) ein oder mehr weitere Lüftungsklappenelemente aufweist, wobei die weiteren Lüftungsklappenelemente jeweils Lüftungsschlitze aufweisen, die jeweils von anderen Lüftungsklappenelementen in der ersten Position (30) verschlossen werden.

9. Lüftungssystem für Schaltanlagen,
**dadurch gekennzeichnet, dass** das Lüftungssystem einen Lüftungseinlass (50) oder Lüftungsauslass (52) mit einer Lüftungsklappe nach einem der vorstehenden Ansprüche aufweist.

10. Verfahren zum montieren einer Lüftungsklappe (5) für Schaltanlagen,
**dadurch gekennzeichnet, dass** in oder an einem Lüftungseinlass (50) oder Lüftungsauslass (52) eine Lüftungsklappe (5) nach einem der vorstehenden Ansprüche 1 bis 8 beweglich befestigt wird.

## Claims

1. Ventilation flap (5) for switching systems (1)
**characterized in that**
• the ventilation flap (5) has a first ventilation flap element (10) and at least one second ventilation flap element (20),
• the first ventilation flap element (10) has first ventilation slits (15),
• the second ventilation flap element (20) has second ventilation slits (25),
• in a first position (30) of the ventilation flap (5)
∘ the first ventilation slits (15) are closed off by the second ventilation flap element (20), and
∘ the second ventilation slits (25) are closed off by the first ventilation flap element (10),
• and **in that** in a second position (32) of the ventilation flap (5)
∘ the first ventilation slits (15) are not closed off by the second ventilation flap element (20), and
∘ the second ventilation slits (25) are not closed off by the first ventilation flap element (10).

2. Ventilation flap (5) according to Claim 1,
characterizedin that
the first ventilation flap element (10) and the second ventilation flap element (20) are attached to a common moving element (40) and in this way together form the ventilation flap (5).

3. Ventilation flap (5) according to Claim 2,
**characterized in that**
the first ventilation flap element (10) is limited by a first movement limiter (45), and the second ventilation flap element (20) is limited by a second movement limiter (46), in a movement about the common moving element (40) or with the common moving element (40).

4. Ventilation flap (5) according to Claim 3,
**characterized in that**
the first ventilation flap element (10) is limited by the first movement limiter (45) to a greater extent than the second ventilation flap element (20) is limited by the second movement limiter (46) in a movement about the common moving element (40) or with the common moving element (40).

5. Ventilation flap (5) according to Claim 1,
**characterized in that**
the second ventilation flap element (20) is movably attached to the first ventilation flap element (10) by means of a second moving element (42).

6. Ventilation flap (5) according to Claim 5,
**characterized in that**
the first ventilation flap element (10) is movably attached to a first moving element (41), and the second ventilation flap element (20) is movably attached to the first ventilation flap element (10), by means of the second moving element (42).

7. Ventilation flap (5) according to Claim 6,
**characterized in that**
the first ventilation flap element (10) is limited by a first movement limiter (45) in a movement about the first moving element (41) or with the first moving element (41), and the second ventilation flap element (20) is limited by a second movement limiter (46) in a movement about the second moving element (42) or with the second moving element (42).

8. Ventilation flap (5) according to one of the preceding claims,
**characterized in that**
the ventilation flap (5) has, in addition to the first ventilation flap element (10) and in addition to the second ventilation flap element (20), one or more further ventilation flap elements, wherein the further ventilation flap elements each have ventilation slits which are each closed off by other ventilation flap elements in the first position (30) .

9. Ventilation system for switching systems,
**characterized in that**
the ventilation system has a ventilation inlet (50) or a ventilation outlet (52) with a ventilation flap according to one of the preceding claims.

10. Method for mounting a ventilation flap (5) for switching systems,
**characterized in that**
a ventilation flap (5) according to one of the preceding Claims 1 to 8 is movably attached in or to a ventilation inlet (50) or a ventilation outlet (52) .

## Revendications

1. Volet (5) d'aération pour des installations (1) de distribution
**caractérisé en ce que**
• le volet (5) d'aération a un premier élément (10) de volet d'aération et au moins un deuxième élément (20) de volet d'aération,
• le premier élément (10) de volet d'aération a des premières fentes (15) d'aération,
• le deuxième élément (20) de volet d'aération a des deuxièmes fentes (25) d'aération,
• dans une première position (30) du volet (5) d'aération
∘ les premières fentes (15) d'aération sont fermées par le deuxième élément (20) de volet d'aération et
∘ les deuxièmes fentes (25) d'aération sont fermées par le premier élément (10) de volet d'aération,
• et **en ce que**, dans une deuxième position (32) du volet (5) d'aération
∘ les premières fentes (15) d'aération ne sont pas fermées par le deuxième élément (20) de volet d'aération et
∘ les deuxièmes fentes (25) d'aération ne sont pas fermées par le premier élément (10) de volet d'aératon.

2. Volet (5) d'aération suivant la revendication 1,
**caractérisé en ce que**
le premier élément (10) de volet d'aération et le deuxième élément (20) de volet d'aération sont fixés à un élément (40) de déplacement commun et forment ainsi ensemble le volet (5) d'aération.

3. Volet (5) d'aération suivant la revendication 2,
**caractérisé en ce que**
le premier élément (10) de volet d'aération est, par un premier limiteur (45) de déplacement, et le deuxième élément (20) de volet d'aération, par un deuxième limiteur (46) de déplacement, limité dans un déplacement autour de l'élément (40) de déplacement commun ou avec lui.

4. Volet (5) d'aération suivant la revendication 3,
**caractérisé en ce que**
le premier élément (10) de volet d'aération est, par le premier limiteur (45) de déplacement, limité davantage que le deuxième élément (20) de volet d'aération dans un déplacement autour de l'élément (40) de déplacement commun ou avec lui.

5. Volet (5) d'aération suivant la revendication 1,
**caractérisé en ce que**
le deuxième élément (20) de volet d'aération est fixé de manière mobile au premier élément (10) de volet d'aération au moyen d'un deuxième élément (42) de déplacement.

6. Volet (5) d'aération suivant la revendication 5,
**caractérisé en ce que**
le premier élément (10) de volet d'aération peut être fixé de manière amovible à un premier élément (41) de déplacement et le deuxième élément (20) de volet d'aération est fixé de manière amovible au premier élément (10) de volet d'aération au moyen du deuxième élément (42) de déplacement.

7. Volet (5) d'aération suivant la revendication 6,
**caractérisé en ce que**
le premier élément (10) de volet d'aération est, par un premier limiteur (45) de déplacement, limité dans un déplacement autour du premier élément (41) de déplacement ou avec lui et le deuxième élément (20) de volet d'aération est, par un deuxième limiteur (46) de déplacement, limité dans un déplacement autour du deuxième élément (42) de déplacement ou avec lui.

8. Volet (5) d'aération suivant l'une des revendications précédentes,
**caractérisé en ce que**
le volet (5) d'aération a, en plus, du premier élément (10) de volet d'aération et du deuxième élément (20) de volet d'aération, un ou plusieurs autres éléments de volet d'aération, les autres éléments de volet d'aération ayant chacun des fentes d'aération, qui sont fermées dans la première position (30) respectivement par d'autres éléments de volet d'aération.

9. Système d'aération pour des installations de distribution, **caractérisé en ce que**
le système d'aération a une entrée (50) d'aération ou une sortie (52) d'aération ayant un volet d'aération suivant l'une des revendications précédentes.

10. Procédé de montage d'un volet (5) d'aération pour des installations de distribution,
**caractérisé en ce que**
dans ou sur une entrée (50) d'aération ou une sortie (52) d'aération est fixé, de manière mobile un volet (5) d'aération suivant l'une des revendications précédentes 1 à 8.
